# EUROPEAN PATENT SPECIFICATION

(11) **EP 3 592 090 B1**
(45) Date of publication and mention of the grant of the patent: **04.05.2022**
(21) Application number: 18781884.4
(22) Date of filing: 22.03.2018
(51) Int. Cl.: H04L 1/18, H04W 72/12

(54) **METHOD FOR SENDING SCHEDULING INFORMATION AND NETWORK DEVICE**
VERFAHREN ZUM SENDEN VON PLANUNGSINFORMATIONEN UND NETZWERKVORRICHTUNG
PROCÉDÉ D'ENVOI D'INFORMATIONS DE PLANIFICATION ET DISPOSITIF DE RÉSEAU

(30) Priority: 04.04.2017 CN 201710215598
(43) Date of publication of application: 08.01.2020
(73) Proprietor: Huawei Technologies Co., Ltd., Longgang District Shenzhen, Guangdong 518129 (CN)
(72) Inventor: CHEN, Yan, Shenzhen Guangdong 518129 (CN); XU, Xiuqiang, Shenzhen Guangdong 518129 (CN); WU, Yiqun, Shenzhen Guangdong 518129 (CN)
(74) Representative: Pfenning, Meinig & Partner mbB
(86) International application number: PCT/CN2018/080031
(87) International publication number: WO 2018/184471

(56) References cited:
- EP-A1- 3 113 566
- CN-A- 103 001 749
- CN-A- 105 451 358
- CN-A- 106 162 904
- CN-A- 106 658 742
- INTERDIGITAL COMMUNICATIONS: "On Adaptive HARQ for UL URLLC", 3GPP DRAFT; R1-1705523 ON ADAPTIVE HARQ FOR UL URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243652, Retrieved from the Internet: URL:http://www.3gpp.org/ftp/Meetings_3GPP_ SYNC/RAN1/Docs/ [retrieved on 2017-04-02]
- CATT: "Further details of UL grant-free transmission for URLLC", 3GPP DRAFT; R1-1704585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051242724, Retrieved from the Internet: URL:http://www.3gpp.org/ftp/Meetings_3GPP_ SYNC/RAN1/Docs/ [retrieved on 2017-04-02]
- SAMSUNG: "Grant-free UL transmission for URLLC", 3GPP DRAFT; R1-1705406, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243536, Retrieved from the Internet: URL:http://www.3gpp.org/ftp/Meetings_3GPP_ SYNC/RAN1/Docs/ [retrieved on 2017-04-02]
- HUAWEI ET AL: "The retransmission and HARQ schemes for grant-free", 3GPP DRAFT; R1-1608859, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148913, Retrieved from the Internet: URL:http://www.3gpp.org/ftp/Meetings_3GPP_ SYNC/RAN1/Docs/ [retrieved on 2016-10-09]
- FUJITSU: "Discussions on grant-free for UL URLLC", 3GPP DRAFT; R1-1701921 DISCUSSIONS ON GRANT-FREE FOR UL URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209083, Retrieved from the Internet: URL:http://www.3gpp.org/ftp/Meetings_3GPP_ SYNC/RAN1/Docs/ [retrieved on 2017-02-12]

## Description

### TECHNICAL FIELD

The present invention relates to the field of wireless communications, and in particular, to a scheduling information sending method and a network device.

### BACKGROUND

In an existing wireless communications network (for example, Long Term Evolution, LTE), uplink data transmission is performed in a scheduling/grant (Scheduling/Grant) based transmission mode. Therefore, uplink data transmission is controlled by a base station (Base Station, BS) entirely. In the scheduling/grant (Scheduling/Grant) based transmission mode, user equipment (User Equipment, UE) first sends an uplink scheduling request to a BS. After receiving the request, the BS sends an uplink grant (Up Link Grant, UL Grant) to the UE to notify the UE of an uplink transmission resource allocated to the UE, and the UE sends uplink data on the allocated uplink transmission resource. This transmission mode is also referred to as a grant-based (Grant-based, GB) transmission mode.

Massive machine type communication (Massive Machine Type Communication, mMTC) is a typical application scenario of a next-generation communications network. Typically, mMTC features a large quantity of connections, namely, a large quantity of UEs; and a main service type is a small data packet service, which requires a specific transmission latency. When a massive quantity of UEs access a wireless communications network, if the grant-based transmission mode is used, heavy signaling transmission overheads and scheduling pressure on BS resource allocation are caused, and a significant transmission latency is caused as well. Ultra-reliable and low latency communications (Ultra-Reliable and Low Latency Communication, URLLC) is another typical application scenario of the next-generation communications network. For URLLC scenarios such as internet of vehicles, self-driving, and industrial control, a system has very high requirements on latency and reliability. In some URLLC application scenarios, the system requires a transmission latency less than 1 ms, but the existing GB transmission mode cannot meet such a high latency requirement.

In view of this, the next-generation communications network may use a grant-free (Grant-Free, GF) transmission mode to support massive UE access and low-latency data transmission. In the GF transmission mode, uplink data transmission of the UE does not require a dynamic and/or explicit grant from the base station. Compared with the GB transmission mechanism, the GF transmission mode does not require a process of sending an uplink scheduling request and waiting to receive a grant from the base station, and a transmission latency is greatly reduced, thereby meeting a latency requirement in the mMTC scenario and the URLLC scenario.

A K-time repeated transmission technology is introduced into the GF transmission mode to improve transmission reliability. In the K-time repeated transmission technology, when the UE needs to send a data packet, the UE uses the GF transmission mode to continuously send K times of repetitions (repetition) of the data packet on K grant-free resources consecutive in time. Different repetitions may be same redundancy versions of the data packet, or may be different redundancy versions of the data packet.

A solution of using the GB transmission mode for retransmission (retransmission) in the GF transmission mode is put forward in the industry to further improve transmission reliability. When the UE repeatedly transmits a data packet for K times in the GF transmission mode, the base station may deliver scheduling information to schedule the UE to retransmit the data packet, so as to improve transmission reliability of the data packet. After receiving the scheduling information from the base station, the UE retransmits the data packet as indicated by the scheduling information. For example, the UE uses a time-frequency resource specified by the scheduling information, a modulation and coding scheme (MCS), and the like to retransmit the data packet. In addition, after receiving the scheduling information, the UE may stop an unsent repetition in the K-time repetitions.

However, in the prior art, there is still a lack of a technical solution about how to deliver the scheduling information in the process of K-time repeated transmission. "On Adaptive HARQ for UL URLLC" (INTERDIGITAL COMMUNICATIONS, vol. RAN WG1, no. Spokane, USA; 20170403 - 20170407, (20170402), 3GPP DRAFT; R1-1705523 ON ADAPTIVE HARQ FOR UL URLLC, 3RD GENERATION PARTNERSHIP PROJECT (3GPP)) discloses that the UE completes a burst of m transmissions for the TB, none of which are successfully decoded by the gNB. The gNB at this point may decide to switch to grant-based retransmission, and would send an UL scheduling grant, which the UE receives as it monitors the NR-PDCCH while in grant-free transmission mode. "Further details of UL grant-free transmission for URLLC" (CATT, vol. RAN WG1, no. Spokane, USA; 20170403 - 20170407, (20170402), 3GPP DRAFT; R1-1704585, 3RD GENERATION PARTNERSHIP PROJECT (3GPP)) discloses K repetitions for a TB transmission with/without

### SUMMARY

In view of this, the present invention provides a scheduling information sending method and a network device according to the independent claims, to effectively control sending of scheduling information in a process of performing K-time repeated transmission in a GF transmission mode.

In the solution provided in this application, the network device may effectively control sending of the scheduling information, so as to ensure that the solution of using the GB transmission mode for retransmission in the GF transmission mode is implemented. In addition, because the network device sends the scheduling information to the UE after failing to receive for consecutive N times the data repeatedly sent by the UE, it is ensured that the data repeatedly transmitted can be effectively used, and reliability brought by the GB transmission mode can be introduced into the GF transmission mode.

### DESCRIPTION OF DRAWINGS

FIG. 1 is a schematic structural diagram of a communications system according to an embodiment of the present invention;
FIG. 2A is a schematic diagram of a process of using a K-time repeated transmission technology for data transmission in a GF transmission mode;
FIG. 2B is a schematic diagram of another process of using a K-time repeated transmission technology for data transmission in a GF transmission mode;
FIG. 3 is a schematic flowchart of a scheduling information sending method according to Embodiment 1;
FIG. 4A and FIG. 4B are a schematic flowchart of a scheduling information sending method according to Embodiment 2;
FIG. 5 is a schematic flowchart of a scheduling information sending method according to Embodiment 3;
FIG. 6 is a schematic flowchart of a scheduling information sending method according to Embodiment 4;
FIG. 7 is a schematic diagram of a transmission resource used for K-time repeated transmission according to Embodiment 6;
FIG. 8 is a schematic diagram of a transmission resource used for K-time repeated transmission according to Embodiment 7;
FIG. 9 is a schematic diagram of a transmission resource used for K-time repeated transmission according to Embodiment 8;
FIG. 10 is a schematic structural diagram of a network device according to Embodiment 9; and
FIG. 11 is a schematic structural diagram of another network device according to Embodiment 9.

### DESCRIPTION OF EMBODIMENTS

The following clearly describes the technical solutions in the embodiments of the present invention with reference to the accompanying drawings in the embodiments of the present invention. Apparently, the described embodiments are some rather than all of the embodiments of the present invention. The scope of the invention is defined by the appended claims.

It should be understood that in a current cellular communications system, for example, a communications system such as a global system for mobile communications (Global System for Mobile Communications, "GSM" for short) system, a wideband code division multiple access (Wideband Code Division Multiple Access, "WCDMA" for short) system, or a long term evolution (Long Term Evolution, "LTE" for short) system, voice communication and data communication are mainly supported. Generally, a conventional base station supports a limited quantity of connections, which is easy to implement.

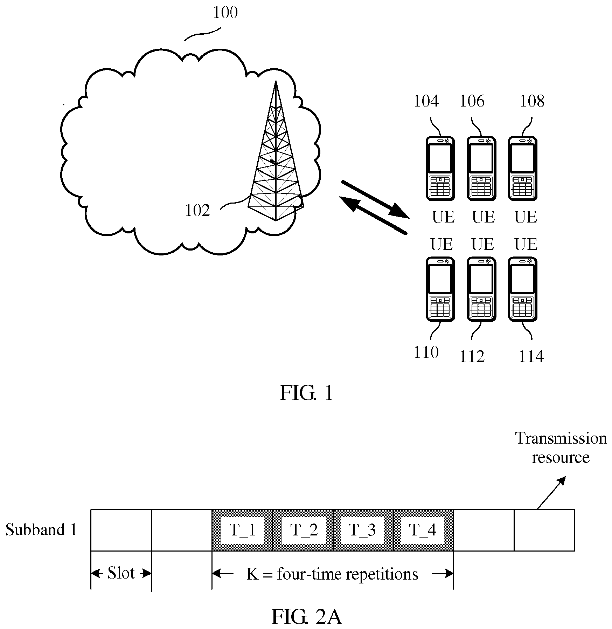

FIG. 1 is a schematic diagram of a communications system to which an embodiment of the present invention is applied. As shown in FIG. 1, a network 100 includes a network device 102 and user equipments 104, 106, 108, 110, 112, and 114 (referred to as UEs in the figure). The network device is connected to a user equipment in a wireless manner, a wired manner, or another manner. It should be understood that FIG. 1 uses an example in which the network includes only one network device for description, but this embodiment of the present invention is not limited thereto. For example, the network may further include more network devices. Similarly, the network may alternatively include more terminal devices, and the network device may further include another device.

The network in this embodiment of the present invention may be a public land mobile network (Public Land Mobile Network, "PLMN" for short), a device-to-device (Device to Device, "D2D" for short) network, an M2M network, or another network. FIG. 1 is merely an example simplified schematic diagram, and the network may further include another network device that is not shown in FIG. 1.

The user equipment (User Equipment, "UE" for short) in this embodiment of the present invention may also be referred to as a terminal device, an access terminal, a subscriber unit, a subscriber station, a mobile station, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, and a terminal device in a future 5G network or a future evolved PLMN network.

The network device in this embodiment of the present invention may be a device configured to communicate with the UE. The network device may be a base transceiver station (Base Transceiver Station, "BTS" for short) in a global system for mobile communications (Global System for Mobile Communications, "GSM" for short) system or code division multiple access (Code Division Multiple Access, "CDMA" for short), or may be a NodeB (NodeB, "NB" for short) in a wideband code division multiple access (Wideband Code Division Multiple Access, "WCDMA" for short) system, or may be an evolved NodeB (Evolved NodeB, "eNB" or "eNodeB" for short) in a long term evolution (Long Term Evolution, "LTE" for short) system, or may be a radio controller in a cloud radio access network (Cloud Radio Access Network, "CRAN" for short) scenario. Alternatively, the network device may be a relay node, an access point, an in-vehicle device, a wearable device, a network device in a future 5G network, a network device in a future evolved PLMN network, or the like.

In this application, grant-free transmission (Grant-Free transmission) is used for uplink data transmission. Grant-free transmission may mean a transmission mode in which UE can implement uplink data transmission without any dynamic scheduling and/or explicit grant from a network device. In grant-free transmission, when UE needs to perform uplink data transmission, the UE may autonomously select at least one transmission resource from a plurality of transmission resources pre-allocated by a network device or a predefined plurality of transmission resources, and uses the selected transmission resource to send uplink data. The network device detects, on one or more transmission resources in the predefined or pre-allocated plurality of transmission resources, the uplink data sent by the UE. The detection may be blind detection, or may be detection performed based on a specific control field in the uplink data, or detection performed in another manner.

The grant may mean that the UE sends an uplink scheduling request to the network device, and after receiving the scheduling request, the network device sends an uplink grant to the UE, where the uplink grant indicates a transmission resource, for uplink transmission, allocated to the UE.

The transmission resource may include a physical resource for uplink data transmission. The physical resource refers to a time-frequency resource limited by one or more transmission time units in time domain or a frequency band with a specific size in frequency domain. One transmission time unit may be a minimum time unit for one time of transmission, for example, one slot (slot), one mini-slot (mini-slot), one subframe (sub-frame), or one transmission time interval (TTI). A size of the TTI may be 1 ms, or another preset or predefined value. The size of the frequency band may be represented in a bandwidth representation manner in an existing communications system (for example, an LTE communications system), for example, the size may be represented by a quantity of subcarriers, by a quantity of resource blocks, or by a quantity of subbands.

The transmission resource may further include but is not limited to one or a combination of more of the following resources:
- a space domain resource such as a transmit antenna and a beam;
- a code domain resource, such as a sparse code multiple access (Sparse Code Multiple Access, "SCMA" for short) codebook, a low density signature (Low Density Signature, "LDS" for short) sequence, and a CDMA code; and
- an uplink pilot resource.

A contention transmission unit (Contention Transmission Unit, "CTU" for short) may be a basic transmission resource for grant-free transmission. The CTU may be a transmission resource that combines time, frequency, and code domain, or may be a transmission resource that combines time, frequency, and pilot, or may be a transmission resource that combines time, frequency, code domain, and pilot.

In this application, the transmission resource used for grant-free transmission is also referred to as a grant-free resource.

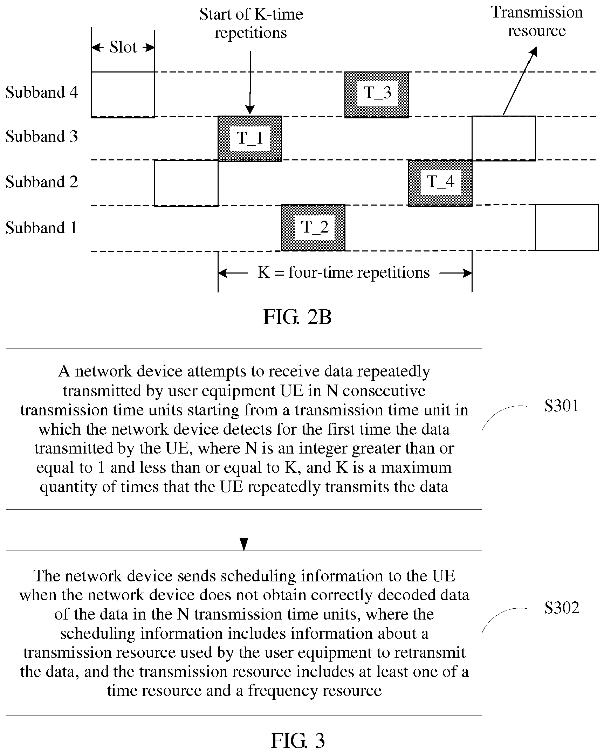

In the network 100 using grant-free transmission, a process of sending uplink data by any one of the UEs 104, 106, 108, 110, 112, and 114 is illustrated in FIG. 2A and FIG. 2B. In examples shown in FIG. 2A and FIG. 2B, one transmission time unit is specifically one slot, and one frequency band is specifically one subband. When the UE (for example, the UE 104) needs to send data A, the UE continuously sends, on a subband 1 in K slots consecutive in time in the grant-free transmission mode, K times of repetitions (repetition) of the data A during K-time repeated transmission: T_1, T_2,..., T_K, as shown in FIG. 2A. In addition, to use an advantage of frequency domain diversity that can further improve data transmission reliability, when continuously sending the K times of repetitions of the data A, the UE may use a frequency hopping (Hopping) technology. That is, frequency domain resources of transmission resources used for two consecutive repetitions do not overlap or do not completely overlap, for example, the resources are on different frequency bands or subbands (sub-band), as shown in FIG. 2B. In this application, repetitions of the data A may be same redundancy versions of the data A, or may be different redundancy versions of the data A. The first repetition of the data A in the K times of repetitions of the data A is a version corresponding to the first (or initial) transmission of the data A.

Even if the UE 104 sends the data A to the network device 102 by using a K-time repeated transmission technology, it cannot be ensured that the network device 102 properly receives the data A. Therefore, in a process in which the UE sends K times of repetitions of the data A, the network device 102 may deliver scheduling information to the UE 104 to schedule the UE 104 to retransmit the data A. As described in the background, the network device 102 does not know how to send the scheduling information to the UE.

Therefore, embodiments of the present invention provide a scheduling information sending method and a network device, to effectively control scheduling information sending.

### Embodiment 1

This embodiment provides a scheduling information sending method. As shown in FIG. 3, the method includes the following steps.

Step S301: A network device 102 attempts to receive data repeatedly transmitted by UE in N consecutive transmission time units starting from a transmission time unit in which the network device 102 detects for the first time the data transmitted by the UE, where N is an integer greater than or equal to 1 and less than or equal to K, and K is a maximum quantity of times that the UE repeatedly transmits the data.

In this step, the N transmission time units include a transmission unit in which the data that is transmitted by the UE and that is detected for the first time is located. The transmission time unit may be a slot, a mini-slot, a subframe, or a transmission time interval.

When UE (for example, the UE 104) that communicates with the network device 102 detects that data A needs to be transmitted, the UE 104 may autonomously select K grant-free resources consecutive in time from grant-free resources pre-allocated by the network device or predefined grant-free resources, and send a repetition of the data A on each selected grant-free resource. For example, the UE 104 selects K grant-free resources distributed on K consecutive transmission time units starting from an I^{th} transmission time unit. When each grant-free transmission resource arrives, the UE sends a repetition of the data A on a frequency domain resource corresponding to the grant-free resource. When a transmission time unit (namely, the I^{th} transmission time unit) corresponding to the first grant-free resource in the K grant-free resources arrives, the UE 104 sends the data A for the first time on a frequency resource corresponding to the first grant-free resource. When a transmission time unit (namely, an (I + 1)^{th} transmission time unit) corresponding to the second grant-free resource in the K grant-free resources arrives, the UE 104 sends the data A for the second time on a frequency resource corresponding to the second grant-free resource. By analogy, when a transmission time unit (namely, an (I + K - 1)^{th} transmission time unit) corresponding to a K^{th} grant-free resource in the K grant-free resources arrives, the UE 104 sends the data A for a K^{th} time on a frequency resource corresponding to the K^{th} grant-free resource. In this embodiment of the present invention, the data A sent each time is referred to as one repetition of the data A, and even the data A sent for the first time is referred to as one repetition of the data A.

To ensure that the network device 102 can detect, on a pre-defined grant-free resource or a grant-free resource pre-allocated by the network device 102, the data sent by the UE, when sending the data to the network device 102 on the grant-free resource, the UE also sends a demodulation reference signal to the network device 102. For example, each time the UE 104 sends the data A to the network device 102, the UE 104 also sends a demodulation reference signal (DeModulation Reference Signal, DMRS) corresponding to the UE 104.

The network device 102 detects, on the pre-defined grant-free resource or the grant-free resource pre-allocated by the network device 102, whether data sent by the UE exists. The network device 102 can determine, by detecting a DMRS, whether any UE uses the grant-free resource to send data in a current transmission time unit. For example, in a transmission time unit, if the network device 102 detects a DMRS on the grant-free resource, the network device 102 can learn that UE corresponding to the DMRS sends data on the grant-free resource corresponding to the transmission time unit. Otherwise, the network device 102 considers that no UE sends data to the network device 102.

When detecting a DMRS corresponding to UE, the network device 102 stores received data sent together with the DMRS into a HARQ buffer of a HARQ process for sending the data and the DMRS, and decodes the data in the buffer. If the decoding succeeds, the network device 102 obtains correctly decoded data of the data, and feeds back an acknowledgment (ACK) to the UE.

Because of a time-variant characteristic of a channel condition, the following case may occur: UE sends data on a grant-free resource in a transmission time unit, but the network device 102 does not detect, on the grant-free resource, the data sent by the UE (for example, the network device 102 does not detect a DMRS corresponding to the UE). Therefore, for the K repetitions of the data A sent by the UE 104, the network device 102 may detect only one or several of the K repetitions of the data A. For example, the network device 102 may detect only the repetition of the data A sent by the UE 104 in the (I + 1)^{th} transmission time unit.

The UE 104 starts to send the repetition of the data A from the I^{th} transmission time unit. However, the network device may not detect, in the I^{th} transmission time unit, the data sent by the UE 104, but may detect, in the (I + 1)^{th} transmission time unit, the data A sent by the UE 104. Therefore, the (I + 1)^{th} transmission time unit is a transmission time unit in which the data A is detected for the first time. It may be understood that the network device 102 may alternatively detect the data A in the I^{th} transmission time unit, and therefore the data A is the data A that is repeatedly transmitted by the UE for the first time

In N consecutive transmission time units starting from the (I + 1)^{th} transmission time unit, the network device 102 attempts to receive the data A repeatedly transmitted by the UE 104. The receiving herein includes: detecting whether the UE 104 sends the data A, and decoding the detected data A. If the network device 102 detects the data A sent by the UE 104, and successfully decodes the detected data A, it is considered that the network device 102 successfully receives the data A sent by the UE 104 (that is, the network device obtains the correctly decoded data of the data A); otherwise, it is considered that the network device 102 does not successfully receive the data A sent by the UE 104 (that is, the network device 102 does not obtain the correctly decoded data of the data A). Because it cannot be ensured that the network device 102 can detect, in a specific transmission time unit, the data A sent by the UE 104, receiving performed by the network device 102 in each transmission time unit is an attempt of receiving.

Step S302: The network device sends scheduling information to the UE when the network device 102 does not obtain correctly decoded data of the data in the N transmission time units, where the scheduling information includes information about a transmission resource used by the user equipment to retransmit the data, and the transmission resource includes at least one of a time resource and a frequency resource.

When the network device 102 does not successfully receive, in N consecutive transmission time unit starting from the (I + 1)^{th} transmission time unit, the data A sent by the UE 104, the network device 102 sends the scheduling information to the UE 104, to schedule the UE 104 to retransmit the data A on a resource specified by the scheduling information.

Provided that the network device 102 successfully receives the data A in a specific transmission time unit in the N transmission time units, the network device 102 sends an ACK to the UE 104. After receiving, in a specific transmission time unit, the ACK sent by the network device, the UE 104 stops repeatedly transmitting the data A from a next transmission time unit of the transmission time unit.

In the scheduling information sending method provided in Embodiment 1 of the present invention, the network device may effectively control sending of the scheduling information, so as to ensure that a solution of using a GB transmission mode for retransmission in a GF transmission mode can be implemented. In addition, because the network device 102 sends the scheduling information to the UE after failing to receive for consecutive N times the data repeatedly sent by the UE, it is ensured that the data repeatedly transmitted can be effectively used, and reliability brought by the GB transmission mode can be introduced into the GF transmission mode.

### Embodiment 2

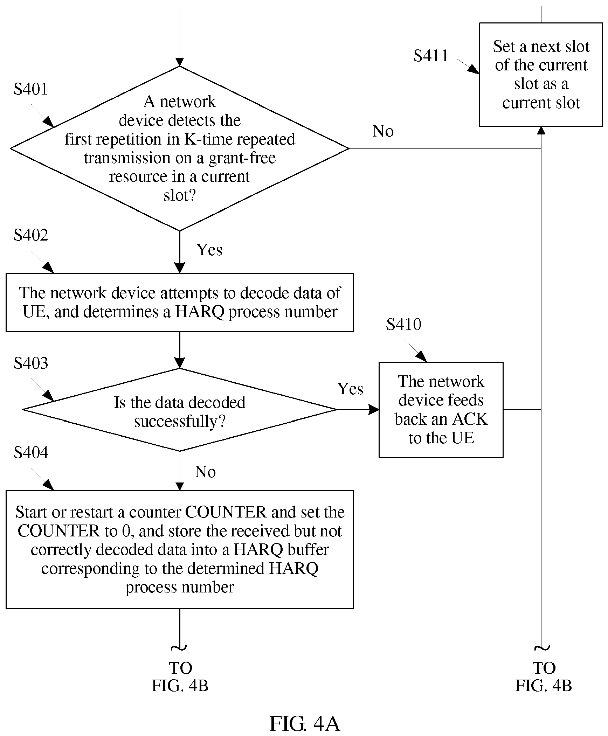

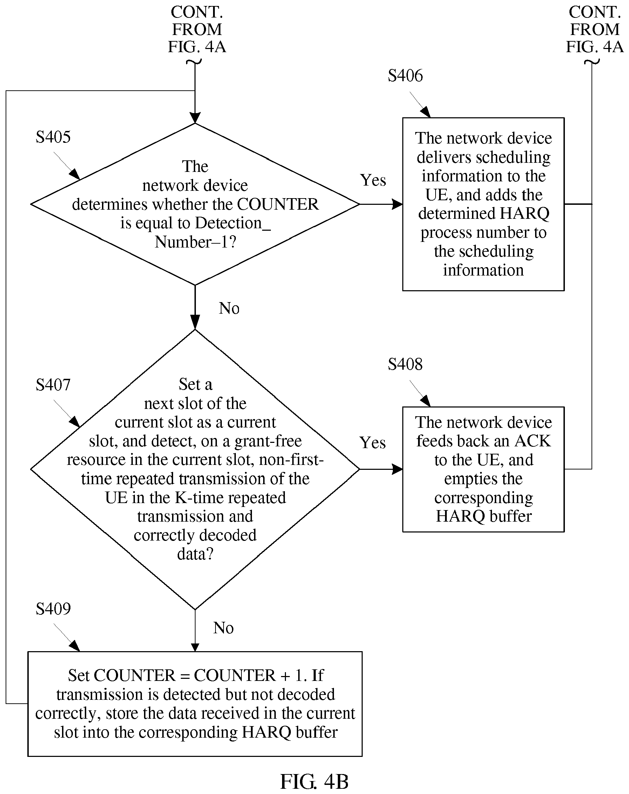

This embodiment provides a scheduling information sending method. As shown in FIG. 4A and FIG. 4B, the method includes the following steps.

Step S401: A network device 102 detects, on a grant-free resource in a current slot, whether UE sends data; if the network device 102 detects that the UE sends data, and determines that the detected data is data of the first-time transmission in K-time repeated transmission, the network device 102 performs step S402; otherwise, the network device 102 performs step S411.

Step S402: The network device 102 attempts to decode the data of the UE on the grant-free resource in the current slot, and determines a HARQ process number of a HARQ process for transmitting the data.

Step S403: If the network device 102 successfully decodes the data of the UE, the network device 102 performs step S410; otherwise, the network device 102 performs step S404.

Step S404: The network device 102 starts or restarts a counter COUNTER, sets the COUNTER to 0, stores the received but not correctly decoded data in a HARQ buffer corresponding to the determined HARQ process number, and then performs step S405.

Step S405: The network device 102 determines whether a value of the COUNTER is equal to Detection_Number-1, where Detection_Number (namely, "N" in Embodiment 1) is a predefined integer greater than 0 and less than or equal to K; if the COUNTER is equal to Detection_Number-1, the network device 102 performs step S406; otherwise, the network device 102 performs step S407.

Step S406: The network device 102 delivers scheduling information to the UE, and adds the determined HARQ process number to the scheduling information, to schedule the UE to retransmit the data in the HARQ buffer corresponding to the HARQ process number on the UE side, and then performs step S411.

Step S407: The network device 102 sets a next slot of the current slot as a current slot, and detects, on a grant-free resource in the current slot, whether the UE sends data. If the network device 102 detects that the UE sends data, and the data is data of non-first-time transmission in the K-time repeated transmission, the network device 102 attempts to decode grant-free data of the UE in combination with the data in the HARQ buffer corresponding to the determined HARQ process number and the data received in the slot; if the network device 102 correctly decodes the data sent by the UE, the network device 102 performs step S408; otherwise, the network device 102 performs step S409.

Step S408: If the network device 102 correctly decodes the data sent by the UE, the network device 102 feeds back an ACK to the UE, empties the corresponding HARQ buffer, and performs step S411.

Step S409: The network device 102 sets COUNTER = COUNTER + 1, stores the data received in the current slot into the HARQ buffer corresponding to the determined HARQ process number, and performs step S405.

Step S410: The network device 102 feeds back an ACK to the UE and performs step S411.

Step S411: The network device 102 sets a next slot of the current slot as a current slot, and performs step S401.

In steps S401 and S407, a method for the network device 102 to detect, on the grant-free resource in the current slot, whether the UE sends data is as follows: The network device 102 detects at least one DMRS corresponding to the UE on the grant-free resource; if a DMRS is detected, it is considered that the UE sends data on the grant-free resource; otherwise, it is considered that the UE does not send data on the grant-free resource.

In steps S401 and S407, there may be the following two methods for the network device 102 to determine whether the data sent by the UE on the grant-free resource in the current slot is the data of the first-time transmission in the K-time repeated transmission:

According to the invention, the network device uses Method 1: The network device 102 allocates at least two DMRSs to the UE, where DMRS_1 is used for the first-time repeated transmission in the K-time repeated transmission of the UE, and DMRS_2 is used for non-first-time repeated transmission in the K-time repeated transmission of the UE. If the network device 102 detects DMRS_1 on the grant-free resource in the current slot, it is considered that the UE performs the first-time repeated transmission in the K-time repeated transmission on the grant-free resource. If the network device 102 detects DMRS_2 on the grant-free resource, it is considered that the UE performs the non-first-time repeated transmission in the K-time repeated transmission on the grant-free resource.

Method 2 is presented as an example not falling under the scope of the invention: When the UE sends data on the grant-free resource in the current slot, the UE explicitly sends indication information to the network device 102, where the indication information is used to indicate whether the data sent on the grant-free resource is data of the first-time repeated transmission in the K-time repeated transmission, and the network device 102 can decode the indication information before the data. If the indication information indicates that the data sent by the UE on the grant-free resource is the data of the first-time repeated transmission in the K-time repeated transmission, the network device 102 considers that the UE performs the first-time repeated transmission in the K-time repeated transmission on the grant-free resource. If the indication information indicates that the data sent by the UE on the grant-free resource is data of non-first-time repeated transmission in the K-time repeated transmission, the network device 102 considers that the UE performs the non-first-time repeated transmission in the K-time repeated transmission on the grant-free resource.

### Embodiment 3

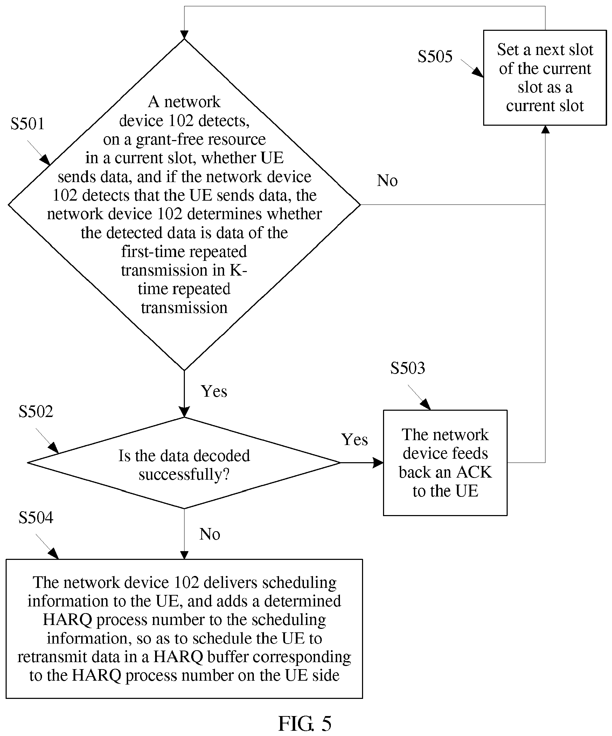

This embodiment provides another scheduling information sending method, as shown in FIG. 5. The method is performed in a case in which Detection_Number = 1 in Embodiment 2, and the method includes the following steps.

Step S501: A network device 102 detects, on a grant-free resource in a current slot, whether UE sends data. If the network device 102 detects that the UE sends data, the network device 102 determines whether the detected data is data of the first-time repeated transmission in K-time repeated transmission. If the network device 102 determines that the detected data is the data of the first-time repeated transmission in the K-time repeated transmission, the network device 102 performs step S502; otherwise, the network device 102 performs step S505.

Step S502: The network device 102 attempts to decode the detected data of the UE on the grant-free resource in the current slot, and determines a HARQ process number. If the detected data of the UE is decoded successfully, the network device performs step S503; otherwise, the network device performs step S504.

Step S503: The network device 102 feeds back an ACK to the UE, and performs step S505; otherwise, the network device performs step S504.

Step S504: The network device 102 delivers scheduling information to the UE, and adds a determined HARQ process number to the scheduling information, so as to schedule the UE to retransmit data in a HARQ buffer corresponding to the HARQ process number on the UE side, and performs step S505.

Step S505: The network device 102 sets a next slot of the current slot as a current slot, and performs step S501.

In this embodiment, a method for the network device 102 to detect, on the grant-free resource in the current slot, whether the UE sends data is the same as the method in Embodiment 2, and a method for the network device 102 to determine whether the data sent by the UE on the grant-free resource in the current slot is the data of the first-time repeated transmission in the K-time repeated transmission is also the same as the method in Embodiment 2. Therefore, details are not described in this embodiment.

### Embodiment 4

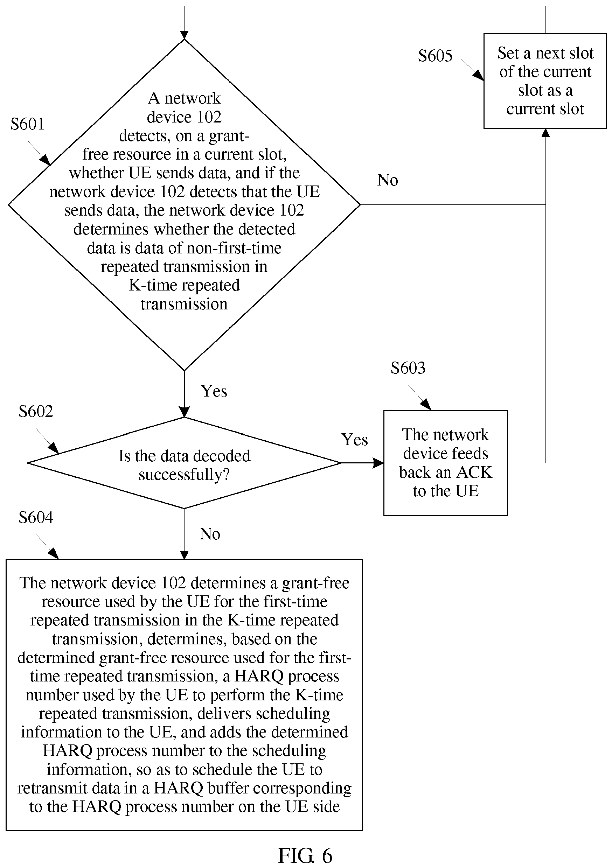

This embodiment provides still another scheduling information sending method. As shown in FIG. 6, the method includes the following steps.

Step S601: A network device 102 detects, on a grant-free resource in a current slot, whether UE sends data. If the network device 102 detects that the UE sends data, the network device 102 determines whether the detected data is data of non-first-time repeated transmission in K-time repeated transmission of the UE. If the network device 102 determines that the detected data is the data of non-first-time repeated transmission in the K-time repeated transmission of the UE, the network device 102 performs step S602; otherwise, the network device 102 performs step S605.

Step S602: The network device 102 attempts to decode grant-free data of the UE on the grant-free resource in the current slot. If the data is successfully decoded, the network device 102 performs step S603; otherwise, the network device 102 performs step S604.

Step S603: The network device feeds back an ACK to the UE, and then performs step S605.

Step S604: The network device 102 determines a grant-free resource used by the UE for the first-time repeated transmission in the K-time repeated transmission, determines, based on the determined grant-free resource used for the first-time repeated transmission, a HARQ process number corresponding to a HARQ process used by the UE to perform the K-time repeated transmission, delivers scheduling information to the UE, and adds the determined HARQ process number to the scheduling information, so as to schedule the UE to retransmit data in a HARQ buffer corresponding to the HARQ process number on the UE side, and performs step S605.

Step S605: The network device 102 sets a next slot of the current slot as a current slot, and performs step S601.

In this embodiment, a method for the network device 102 to detect, on the grant-free resource in the current slot, whether the UE sends data is the same as the method in Embodiment 2, and a method for the network device 102 to determine whether the data sent by the UE on the grant-free resource in the current slot is the data of the first-time repeated transmission in the K-time repeated transmission is also the same as the method in Embodiment 2. Therefore, details are not described in this embodiment.

### Embodiment 5

This embodiment provides a method for determining a HARQ process number. This method may be applied to each of the foregoing embodiments to determine a HARQ process number of a HARQ process for K-time repeated transmission.

A precondition for applying a HARQ technology is as follows: UE stores generated data in a HARQ buffer, and attempts to send a same redundancy version or a different redundancy version of the data for a plurality of times. In addition, after receiving a redundancy version of the data, a network device stores the redundancy version in the HARQ buffer, and after receiving a redundancy version of the data for a next time, the network device combines and receives the redundancy versions stored in the HARQ buffer. The HARQ buffer may be identified uniquely by a HARQ process number. Therefore, the UE and the network device separately store sent data and received data of a same data packet in a HARQ buffer identified by a same HARQ process number. This is the key to applying of the HARQ technology.

When the UE uses a grant-free resource to repeatedly transmit data for K times, a process number of a HARQ process used for transmitting the data is determined by using the first-time repeated transmission in K-time repeated transmission. For example, the process number is determined by using time domain information (for example, a subframe index, a slot number, and a TTI label) and/or frequency domain information (for example, a subband subscript, a resource block subscript, and a grant-free region subscript) of the grant-free resource used for the first-time repeated transmission.

When a network device 102 detects, for the first time in a transmission time unit, data sent by UE (for example, UE 104), the network device 102 may determine, based on a transmission resource on which the data detected for the first time is located, a HARQ process number of a HARQ process used by the UE 104 to send the data. Specifically, when the network device 102 determines that the data detected for the first time is data of the first-time transmission in K-time repeated transmission of the UE 104, the network device 102 determines the HARQ process number based on the transmission resource occupied by the first-time transmission.

When the network device 102 determines that the data detected for the first time is data of non-first-time transmission in the K-time repeated transmission of the UE 104, the network device 102 determines, based on the transmission resource on which the data detected for the first time is located, a transmission resource used for the first-time transmission in the K-time repeated transmission for sending the data, and further determines the HARQ process number based on the transmission resource used for the first-time transmission.

### Embodiment 6

This embodiment further provides a method for determining a transmission resource used for first-time transmission. The method may be used to determine the transmission resource used for the first-time transmission in Embodiment 5.

It is assumed that a network device 102 allocates M subbands to UE for grant-free transmission, and configures a frequency hopping rule used for the UE to perform K-time (1 ≤ K ≤ M) repeated transmission as: subband m_1, subband m_2, ..., and subband m_M, where m_1, m_2, ..., and m_M is any arrangement of integers 1, 2, ..., and M. This means that when the UE starts to send K times of repetitions of data in any slot, the first repetition is definitely located on subband m_1 of the slot, and the last repetition is definitely located on subband m_K.

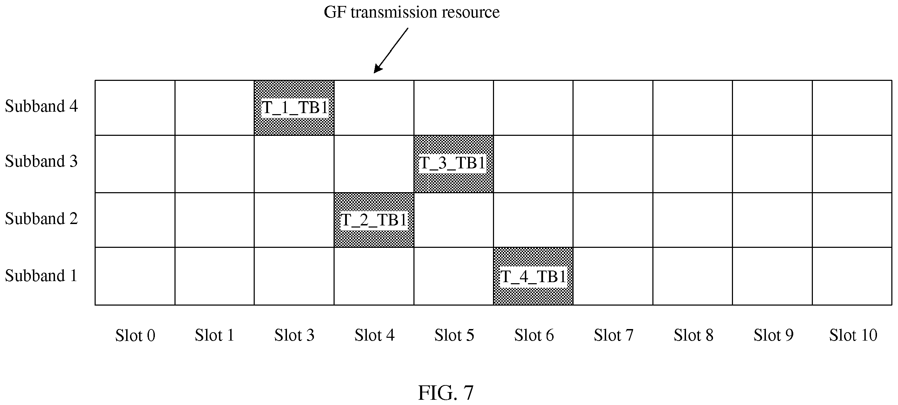

As shown in FIG. 7, it is assumed that M = 4, K = 4, m_1 = 4, m_2 = 2, m_3 = 3, m_4 = 1, and the UE sends K times of repetitions of a data packet TB1 starting from a slot 3. In this case, if the network device 102 detects, on a subband 2 of a slot 4, that the UE sends data, the network device 102 may determine, according to the frequency hopping rule of the UE, that the data is data of the second-time repeated transmission instead of data of the first-time repeated transmission, and the first-time repeated transmission occurs on a subband 4 of a slot 3. If the network device 102 detects, on a subband 3 of a slot 5, that the UE sends data, the network device 102 may determine, according to the frequency hopping rule of the UE, that the data is data of the third-time repeated transmission instead of the data of the first-time repeated transmission, and the first-time repeated transmission occurs on the subband 4 of the slot 3. If the network device 102 detects, on a subband 1 of a slot 6, that the UE sends data, the network device 102 may determine, according to the frequency hopping rule of the UE, that the data is data of the fourth-time repeated transmission instead of the data of the first-time repeated transmission, and the first-time repeated transmission occurs on the subband 4 of the slot 3.

In this embodiment, the network device 102 detects, on a grant-free resource, whether the UE sends data. When detecting that the UE sends data, the network device 102 determines a transmission resource used for the first-time repeated transmission according to the frequency hopping rule of the UE and a transmission resource on which the detected data is located. In this embodiment, the frequency hopping rule has the following characteristic: Specified frequency resources used for any two times of repeated transmission are different.

### Embodiment 7

This embodiment further provides a method for determining a transmission resource used for first-time transmission. The method may be used to determine the transmission resource used for the first-time transmission in Embodiment 5.

This embodiment is extended on a basis of Embodiment 6, to enable M subbands to support K = M + 1.

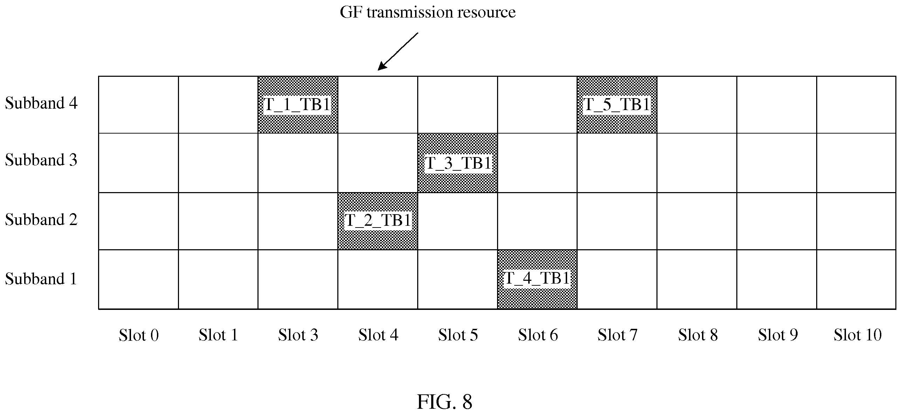

As shown in FIG. 8, M = 4, K = 5, m_1 = 4, m_2 = 2, m_3 = 3, m_4 = 1, m_5 = 1, and UE sends K times of repetitions of a data packet TB1 starting from a slot 3. In this case, if a network device 102 detects, on a subband 2 of a slot 4, that the UE sends data, the network device 102 may determine, according to a frequency hopping rule of the UE, that the detected data is data of the second-time repeated transmission instead of data of the first-time repeated transmission, and the first-time repeated transmission occurs on a subband 4 of the slot 3. If the network device 102 detects, on a subband 3 of a slot 5, that the UE sends data, the network device 102 may determine, according to the frequency hopping rule of the UE, that the detected data is data of the third-time repeated transmission instead of the data of the first-time repeated transmission, and the first-time repeated transmission occurs on the subband 4 of the slot 3. If the network device 102 detects, on a subband 1 of a slot 6, that the UE sends data, the network device 102 may determine, according to the frequency hopping rule of the UE, that the detected data is data of the fourth-time repeated transmission instead of the data of the first-time repeated transmission, and the first-time repeated transmission occurs on the subband 4 of the slot 3.

In this embodiment, a frequency hopping sequence has the following characteristics: A frequency resource, used for the first-time repeated transmission, specified by the frequency hopping sequence is the same as a frequency resource used for the last repeated transmission, and frequency resources used for any two times of repeated transmission are not the same.

### Embodiment 8

This embodiment further provides a method for determining a transmission resource used for first-time transmission. The method may be used to determine the transmission resource used for the first-time transmission in Embodiment 5.

It is assumed that a network device 102 configures at least two frequency hopping rules for UE: rule 1 and rule 2, and allocates at least two DMRSs to the UE, where DMRS_1 corresponds to rule 1, and DMRS_2 corresponds to rule 2. That is, when the UE uses rule 1 to send a data packet TB1, the UE uses DMRS_1, and when the UE uses rule 2 to send a data packet TB2, the UE uses DMRS_2. In this way, the network device 102 can determine, based on a detected DMRS, which frequency hopping rule is used by the UE to send data.

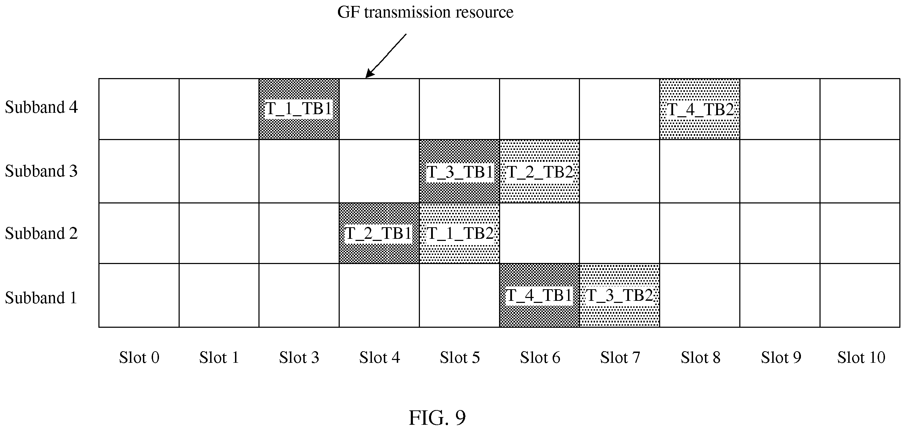

As shown in FIG. 9, it is assumed that M = 4, K = 4, the frequency hopping rule 1 is: subband 4, subband 2, subband 3, and subband 1, and corresponds to DMRS_1, and the frequency hopping rule 2 is: subband 2, subband 3, subband 1, and subband 4, and corresponds to DMRS_2. Starting from a slot 3, the UE uses rule 1 and DMRS_1 to send K times of repetitions of the data packet TB1, and starting from a slot 5, the UE uses rule 2 and DMRS_2 to send K times of repetitions of the data packet TB2. In this way, when the network device 102 uses DMRS_1 to detect separately on subbands 2, 3, and 1 of slots 4, 5, and 6 that the UE sends grant-free data, it can be determined that the data is respectively the second-time, the third-time, and the fourth-time repetitions in the K-time repetitions of TB1, and the first repetition occurs on a subband 4 of the slot 3. When the network device 102 uses DMRS_2 to detect separately on subbands 3, 1, and 4 of slots 6, 7, and 8 that the UE sends grant-free data, it can be determined that the data is respectively the second-time, the third-time, and the fourth-time repetitions in the K-time repetitions of TB1, and the first repetition occurs on a subband 2 of the slot 5.

In another embodiment, when the UE sends each repetition in the K-time repetitions, the UE explicitly carries indication information used to notify the network device 102 that a current repetition is which repetition in the K-time repetitions, and the network device 102 can decode the indication information before the data. For example, the network device 102 detects, on a grant-free resource in a slot n, that the UE sends the third-time repetition in the K-time repetitions, the network device 102 can determine that the first repetition in the K-time repetitions occurs in a slot n-2.

In each of the foregoing embodiments, the method for determining a corresponding HARQ process number based on a grant-free resource used for the first-time repeated transmission in K-time repeated transmission, for example, time domain information and/or frequency domain information of the grant-free resource, may be the method mentioned in Chinese patent application 201710184905.2, and details are not described herein.

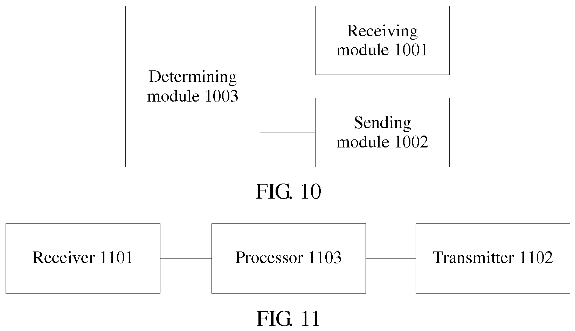

Corresponding to each of the foregoing embodiments, Embodiment 9 further provides a network device, as shown in FIG. 10, including:
a receiving module 1001, configured to attempt to receive data repeatedly transmitted by user equipment UE in N consecutive transmission time units starting from a transmission time unit in which the network device detects for the first time the data transmitted by the UE; and
a sending module 1002, configured to send scheduling information to the UE when the network device does not obtain correctly decoded data of the data in the N transmission time units, where the scheduling information includes information about a transmission resource used by the user equipment to retransmit the data, and the transmission resource includes at least one of a time resource and a frequency resource.

In a specific implementation, the data detected for the first time is specifically data of the first-time transmission in repeated transmission of the UE. In another specific implementation, the data detected for the first time is specifically data of non-first-time transmission in the repeated transmission of the UE.

In a specific implementation, the network device further includes:
a determining module 1003, configured to determine a HARQ process number of a HARQ process used by the UE to transmit the data; and
correspondingly, the scheduling information further includes the HARQ process number.

In another specific implementation, the determining module 1003 is specifically configured to:
determine, based on a transmission resource on which the data detected for the first time is located, the HARQ process number of the HARQ process used by the UE to transmit the data.

In still another specific implementation, the determining module 1003 is specifically configured to:
determine a transmission resource used by the UE for the first-time transmission in the repeated transmission, when the data detected for the first time is data of non-first-time transmission in the repeated transmission of the UE; and
determine the HARQ process number based on the determined transmission resource used for the first-time transmission.

In yet another specific implementation, the determining module 1003 is specifically configured to:
determine, based on a demodulation reference signal included in the data detected for the first time, a transmission resource used by the UE for the first-time transmission in the repeated transmission, when the data detected for the first time is data of non-first-time transmission in the repeated transmission of the UE; and
determine the HARQ process number based on the determined transmission resource used for the first-time transmission.

Another embodiment of the present invention further provides a network device, as shown in FIG. 11, including: a receiver 1101, configured to attempt to receive data repeatedly transmitted by user equipment UE in N consecutive transmission time units starting from a transmission time unit in which the network device detects for the first time the data transmitted by the UE;
a processor 1103, configured to generate scheduling information when the network device does not obtain correctly decoded data of the data in the N transmission time units, where the scheduling information includes information about a transmission resource used by the user equipment to retransmit the data, and the transmission resource includes at least one of a time resource and a frequency resource; and
a transmitter 1102, configured to send the scheduling information generated by the processor 1103 to the UE.

The processor 1103 is further configured to determine a HARQ process number of a HARQ process used by the UE to transmit the data; and
correspondingly, the scheduling information further includes the HARQ process number.

In another specific implementation, the processor 1103 is specifically configured to:
determine, based on a transmission resource on which the data detected for the first time is located, the HARQ process number of the HARQ process used by the UE to transmit the data.

In another specific implementation, the processor 1103 is specifically configured to:
determine a transmission resource used by the UE for the first-time transmission in the repeated transmission, when the data detected for the first time is data of non-first-time transmission in the repeated transmission of the UE; and
determine the HARQ process number based on the determined transmission resource used for the first-time transmission.

In still another specific implementation, the processor 1103 is specifically configured to:
determine, based on a demodulation reference signal included in the data detected for the first time, a transmission resource used by the UE for the first-time transmission in the repeated transmission, when the data detected for the first time is data of non-first-time transmission in the repeated transmission of the UE; and
determine the HARQ process number based on the determined transmission resource used for the first-time transmission.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. A scheduling information sending method, wherein the method comprises:
attempting (S301), by a network device, to receive data repeatedly transmitted on grant-free resource by user equipment UE in N consecutive transmission time units starting from a transmission time unit in which the network device detects for a first time the data transmitted by the UE, wherein N is an integer greater than or equal to 1 and less than or equal to K, and K is a maximum quantity of times that the UE repeatedly transmits the data, and wherein if the network device detects a first DMRS associated with the data detected on the grant-free resource, the data detected for the first time is considered as data of the first-time transmission in the repeated transmission of the UE; and if the network device detects a second DMRS associated with the data detected on the grant-free resource, the data detected for the first time is considered as data of the non-first-time transmission in the repeated transmission of the UE, wherein the first DMRS is used for the first-time transmission in the K-time repeated transmission of the UE, and the second DMRS is used for non-first-time transmission in the K-time repeated transmission of the UE; and
sending (S302), by the network device, scheduling information to the UE when the network device does not obtain correctly decoded data of the data in the N transmission time units, wherein the scheduling information comprises information about a transmission resource used by the user equipment to retransmit the data, and the transmission resource comprises at least one of a time resource and a frequency resource.

2. The method according to claim 1, wherein the method further comprises:
determining, by the network device, a HARQ process number of a HARQ process used by the UE to transmit the data; and
correspondingly, the scheduling information further comprises the HARQ process number.

3. The method according to claim 2, wherein the determining, by the network device, a HARQ process number of a HARQ process used by the UE to transmit the data comprises:
determining, by the network device based on a transmission resource on which the data detected for the first time is located, the HARQ process number of the HARQ process used by the UE to transmit the data.

4. The method according to claim 3, wherein the determining, by the network device based on a transmission resource on which the data detected for the first time is located, the HARQ process number of the HARQ process used by the UE to transmit the data comprises:
determining, by the network device based on the transmission resource on which the data detected for the first time is located, a transmission resource used by the UE for the first-time transmission in the repeated transmission, when the data detected for the first time is data of non-first-time transmission in the repeated transmission of the UE; and
determining, by the network device, the HARQ process number based on the determined transmission resource used for the first-time transmission.

5. The method according to claim 3, wherein the determining, by the network device, a HARQ process number of a HARQ process used by the UE to transmit the data comprises:
determining, by the network device based on a demodulation reference signal comprised in the data detected for the first time, a transmission resource used by the UE for the first-time transmission in the repeated transmission, when the data detected for the first time is data of non-first-time transmission in the repeated transmission of the UE; and
determining, by the network device, the HARQ process number based on the determined transmission resource used for the first-time transmission.

6. A network device, wherein the network device comprises:
a receiving module (1001), configured to attempt to receive data repeatedly transmitted on grant-free resource by user equipment UE in N consecutive transmission time units starting from a transmission time unit in which the network device detects for a first time the data transmitted by the UE, wherein N is an integer greater than or equal to 1 and less than or equal to K, and K is a maximum quantity of times that the UE repeatedly transmits the data, and wherein if the data detected on the grant-free resource is associated with a first DMRS, the data detected for the first time is considered as data of the first-time transmission in the repeated transmission of the UE; and the data detected on the grant-free resource is associated with a second DMRS, the data detected for the first time is considered as data of the non-first-time transmission in the repeated transmission of the UE, wherein the first DMRS is used for the first-time transmission in the K-time repeated transmission of the UE, and the second DMRS is used for non-first-time transmission in the K-time repeated transmission of the UE; and
a sending module (1002), configured to send scheduling information to the UE when the network device does not obtain correctly decoded data of the data in the N transmission time units, wherein the scheduling information comprises information about a transmission resource used by the user equipment to retransmit the data, and the transmission resource comprises at least one of a time resource and a frequency resource.

7. The network device according to claim 6, wherein the network device further comprises:
a determining module (1003), configured to determine a HARQ process number of a HARQ process used by the UE to transmit the data; and
correspondingly, the scheduling information further comprises the HARQ process number.

8. The network device according to claim 7, wherein the determining module (1003) is specifically configured to:
determine, based on a transmission resource on which the data detected for the first time is located, the HARQ process number of the HARQ process used by the UE to transmit the data.

9. The network device according to claim 8, wherein the determining module (1003) is specifically configured to:
determine a transmission resource used by the UE for the first-time transmission in the repeated transmission, when the data detected for the first time is data of non-first-time transmission in the repeated transmission of the UE; and
determine the HARQ process number based on the determined transmission resource used for the first-time transmission.

10. The network device according to claim 7, wherein the determining module (1003) is specifically configured to:
determine, based on a demodulation reference signal comprised in the data detected for the first time, a transmission resource used by the UE for the first-time transmission in the repeated transmission, when the data detected for the first time is data of non-first-time transmission in the repeated transmission of the UE; and
determine the HARQ process number based on the determined transmission resource used for the first-time transmission.

## Patentansprüche

1. Ablaufsteuerungsinformationssendeverfahren, wobei das Verfahren Folgendes umfasst:
Versuchen (S301), durch eine Netzwerkvorrichtung, Daten, die auf einer erteilungsfreien Ressource durch eine Benutzereinrichtung (user equipment - UE) wiederholt übertragen werden, in N aufeinanderfolgenden Übertragungszeiteinheiten ausgehend von einer Übertragungszeiteinheit, in der die Netzwerkvorrichtung die durch die UE übertragenen Daten ein erstes Mal erfasst, zu empfangen, wobei N eine ganze Zahl ist, die größer als oder gleich 1 und kleiner als oder gleich K ist, und K eine maximale Anzahl von Malen ist, die die UE die Daten wiederholt überträgt, und wobei, falls die Netzwerkvorrichtung ein erstes DMRS erfasst, das mit den Daten verknüpft ist, die auf der erteilungsfreien Ressource erfasst werden, die Daten, die zum ersten Mal erfasst werden, als Daten der erstmaligen Übertragung in der wiederholten Übertragung der UE betrachtet werden; und falls die Netzwerkvorrichtung ein zweites DMRS erfasst, das mit den Daten verknüpft ist, die auf der erteilungsfreien Ressource erfasst werden, die Daten, die zum ersten Mal erfasst werden, als Daten der nicht erstmaligen Übertragung in der wiederholten Übertragung der UE betrachtet werden, wobei das erste DMRS für die erstmalige Übertragung in der K-mal wiederholten Übertragung der UE verwendet wird und das zweite DMRS für eine nicht erstmalige Übertragung in der K-mal wiederholten Übertragung der UE verwendet wird; und
Senden (S302), durch die Netzwerkvorrichtung, von Ablaufsteuerungsinformationen an die UE, wenn die Netzwerkvorrichtung korrekt decodierte Daten der Daten in den N Übertragungszeiteinheiten nicht erhält, wobei die Ablaufsteuerungsinformationen Informationen über eine Übertragungsressource umfassen, die durch die Benutzereinrichtung verwendet wird, um die Daten erneut zu übertragen, und die Übertragungsressource eine Zeitressource und/oder eine Frequenzressource umfasst.

2. Verfahren nach Anspruch 1, wobei das Verfahren ferner Folgendes umfasst:
Bestimmen, durch die Netzwerkvorrichtung, einer HARQ-Vorgangsnummer eines HARQ-Vorganges, der durch die UE verwendet wird, um die Daten zu übertragen; und
entsprechend, wobei die Ablaufsteuerungsinformationen ferner die HARQ-Vorgangsnummer umfassen.

3. Verfahren nach Anspruch 2, wobei das Bestimmen, durch die Netzwerkvorrichtung, einer HARQ-Vorgangsnummer eines HARQ-Vorganges, der durch die UE verwendet wird, um die Daten zu übertragen, Folgendes umfasst:
Bestimmen, durch die Netzwerkvorrichtung basierend auf einer Übertragungsressource, auf der sich die Daten befinden, die zum ersten Mal erfasst werden, der HARQ-Vorgangsnummer des HARQ-Vorganges, der durch die UE verwendet wird, um die Daten zu übertragen.

4. Verfahren nach Anspruch 3, wobei das Bestimmen, durch die Netzwerkvorrichtung basierend auf einer Übertragungsressource, auf der sich die Daten befinden, die zum ersten Mal erfasst werden, der HARQ-Vorgangsnummer des HARQ-Vorganges, der durch die UE verwendet wird, um die Daten zu übertragen, Folgendes umfasst:
Bestimmen, durch die Netzwerkvorrichtung basierend auf der Übertragungsressource, auf der sich die Daten befinden, die zum ersten Mal erfasst werden, einer Übertragungsressource, die durch die UE für die erstmalige Übertragung in der wiederholten Übertragung verwendet wird, wenn die Daten, die zum ersten Mal erfasst werden, Daten einer nicht erstmaligen Übertragung in der wiederholten Übertragung der UE sind; und
Bestimmen, durch die Netzwerkvorrichtung, der HARQ-Vorgangsnummer basierend auf der bestimmten Übertragungsressource, die für die erstmalige Übertragung verwendet wird.

5. Verfahren nach Anspruch 3, wobei das Bestimmen, durch die Netzwerkvorrichtung, einer HARQ-Vorgangsnummer eines HARQ-Vorganges, der durch die UE verwendet wird, um die Daten zu übertragen, Folgendes umfasst:
Bestimmen, durch die Netzwerkvorrichtung basierend auf einem Demodulationsreferenzsignal, das in den Daten enthalten ist, die zum ersten Mal erfasst werden, einer Übertragungsressource, die durch die UE für die erstmalige Übertragung in der wiederholten Übertragung verwendet wird, wenn die Daten, die zum ersten Mal erfasst werden, Daten einer nicht erstmaligen Übertragung in der wiederholten Übertragung der UE sind; und
Bestimmen, durch die Netzwerkvorrichtung, der HARQ-Vorgangsnummer basierend auf der bestimmten Übertragungsressource, die für die erstmalige Übertragung verwendet wird.

6. Netzwerkvorrichtung, wobei die Netzwerkvorrichtung Folgendes umfasst:
ein Empfangsmodul (1001), das konfiguriert ist, um zu versuchen, Daten, die auf der erteilungsfreien Ressource durch die Benutzereinrichtung (UE) wiederholt übertragen werden, in N aufeinanderfolgenden Übertragungszeiteinheiten ausgehend von einer Übertragungszeiteinheit, in der die Netzwerkvorrichtung die durch die UE übertragenen Daten zum ersten Mal erfasst, zu empfangen, wobei N eine ganze Zahl ist, die größer als oder gleich 1 und kleiner als oder gleich K ist, und K eine maximale Anzahl von Malen ist, die die UE die Daten wiederholt überträgt,
und wobei, falls die Daten, die auf der erteilungsfreien Ressource erfasst werden, mit einem ersten DMRS verknüpft sind, die Daten, die zum ersten Mal erfasst werden, als Daten der erstmaligen Übertragung in der wiederholten Übertragung der UE betrachtet werden; und die Daten, die auf der erteilungsfreien Ressource erfasst werden, mit einem zweiten DMRS verknüpft sind, wobei die Daten, die zum ersten Mal erfasst werden, als Daten der nicht erstmaligen Übertragung in der wiederholten Übertragung der UE betrachtet werden, wobei das erste DMRS für die erstmalige Übertragung in der K-mal wiederholten Übertragung der UE verwendet wird und wobei das zweite DMRS für die nicht erstmalige Übertragung in der K-mal wiederholten Übertragung der UE verwendet wird; und
ein Sendemodul (1002), das konfiguriert ist, um Ablaufsteuerungsinformationen an die UE zu senden, wenn die Netzwerkvorrichtung korrekt decodierte Daten der Daten in den N Übertragungszeiteinheiten nicht erhält, wobei die Ablaufsteuerungsinformationen Informationen über eine Übertragungsressource umfassen, die durch die Benutzereinrichtung verwendet wird, um die Daten erneut zu übertragen, und die Übertragungsressource eine Zeitressource und/oder eine Frequenzressource umfasst.

7. Netzwerkvorrichtung nach Anspruch 6, wobei die Netzwerkvorrichtung ferner Folgendes umfasst:
ein Bestimmungsmodul (1003), das konfiguriert ist, um eine HARQ-Vorgangsnummer eines HARQ-Vorganges zu bestimmen, der durch die UE verwendet wird, um die Daten zu übertragen; und
entsprechend, wobei die Ablaufsteuerungsinformationen ferner die HARQ-Vorgangsnummer umfassen.

8. Netzwerkvorrichtung nach Anspruch 7, wobei das Sendemodul (1003) speziell für Folgendes konfiguriert ist:
Bestimmen, basierend auf einer Übertragungsressource, auf der sich die Daten befinden, die zum ersten Mal erfasst werden, der HARQ-Vorgangsnummer des HARQ-Vorganges, der durch die UE verwendet wird, um die Daten zu übertragen.

9. Netzwerkvorrichtung nach Anspruch 8, wobei das Bestimmungsmodul (1003) speziell für Folgendes konfiguriert ist:
Bestimmen einer Übertragungsressource, die durch die UE für die erstmalige Übertragung in der wiederholten Übertragung verwendet wird, wenn die Daten, die zum ersten Mal erfasst werden, Daten einer nicht erstmaligen Übertragung in der wiederholten Übertragung der UE sind; und
Bestimmen der HARQ-Vorgangsnummer basierend auf der bestimmten Übertragungsressource, die für die erstmalige Übertragung verwendet wird.

10. Netzwerkvorrichtung nach Anspruch 7, wobei das Bestimmungsmodul (1003) speziell für Folgendes konfiguriert ist:
Bestimmen, basierend auf einem Demodulationsreferenzsignal, das in den Daten enthalten ist, die zum ersten Mal erfasst werden, einer Übertragungsressource, die durch die UE für die erstmalige Übertragung in der wiederholten Übertragung verwendet wird, wenn die Daten, die zum ersten Mal erfasst werden, Daten einer nicht erstmaligen Übertragung in der wiederholten Übertragung der UE sind; und
Bestimmen der HARQ-Vorgangsnummer basierend auf der bestimmten Übertragungsressource, die für die erstmalige Übertragung verwendet wird.

## Revendications

1. Procédé d'envoi d'informations de planification, le procédé comprenant :
la tentative (S301), par un dispositif de réseau, de réception de données transmises de manière répétée sur une ressource sans autorisation par un équipement utilisateur, UE, dans N unités de temps de transmission consécutives à partir d'une unité de temps de transmission dans laquelle le dispositif de réseau détecte pour la première fois les données transmises par l'UE, N étant un entier supérieur ou égal à 1 et inférieur ou égal à K, et K étant une quantité maximale de fois où l'UE transmet de manière répétée les données, et si le dispositif de réseau détecte un premier DMRS associé aux données détectées sur la ressource sans autorisation, les données détectées pour la première fois étant considérées comme des données de la transmission initiale dans la transmission répétée de l'UE ; et si le dispositif de réseau détecte un second DMRS associé aux données détectées sur la ressource sans autorisation, les données détectées pour la première fois étant considérées comme des données de la transmission non initiale dans la transmission répétée de l'UE, le premier DMRS étant utilisé pour la transmission initiale dans la transmission répétée K fois de l'UE, et le second DMRS étant utilisé pour la transmission non initiale dans la transmission répétée K fois de l'UE ; et
l'envoi (S302), par le dispositif de réseau, d'informations de planification à l'UE lorsque le dispositif de réseau n'obtient pas de données correctement décodées des données dans les N unités de temps de transmission, les informations de planification comprenant des informations concernant une ressource de transmission utilisée par l'équipement utilisateur pour retransmettre les données, et la ressource de transmission comprenant une ressource de temps et/ou une ressource de fréquence.

2. Procédé selon la revendication 1, le procédé comprenant en outre :
la détermination, par le dispositif de réseau, d'un numéro de processus HARQ d'un processus HARQ utilisé par l'UE pour transmettre les données ; et
en conséquence, les informations de planification comprenant en outre le numéro de processus HARQ.

3. Procédé selon la revendication 2, la détermination, par le dispositif de réseau, d'un numéro de processus HARQ d'un processus HARQ utilisé par l'UE pour transmettre les données comprenant :
la détermination, par le dispositif de réseau sur la base d'une ressource de transmission sur laquelle sont situées les données détectées pour la première fois, du numéro de processus HARQ du processus HARQ utilisé par l'UE pour transmettre les données.

4. Procédé selon la revendication 3, la détermination, par le dispositif de réseau sur la base d'une ressource de transmission sur laquelle sont situées les données détectées pour la première fois, du numéro de processus HARQ du processus HARQ utilisé par l'UE pour transmettre les données comprenant :
la détermination, par le dispositif de réseau sur la base de la ressource de transmission sur laquelle sont situées les données détectées pour la première fois, d'une ressource de transmission utilisée par l'UE pour la transmission initiale dans la transmission répétée, lorsque les données détectées pour la première fois sont des données de transmission non initiale dans la transmission répétée de l'UE ; et
la détermination, par le dispositif de réseau, du numéro de processus HARQ sur la base de la ressource de transmission déterminée utilisée pour la transmission initiale.

5. Procédé selon la revendication 3, la détermination, par le dispositif de réseau, d'un numéro de processus HARQ d'un processus HARQ utilisé par l'UE pour transmettre les données comprenant :
la détermination, par le dispositif de réseau sur la base d'un signal de référence de démodulation compris dans les données détectées pour la première fois, d'une ressource de transmission utilisée par l'UE pour la transmission initiale dans la transmission répétée, lorsque les données détectées pour la première fois sont des données d'une transmission non initiale dans la transmission répétée de l'UE ; et
la détermination, par le dispositif de réseau, du numéro de processus HARQ sur la base de la ressource de transmission déterminée utilisée pour la transmission initiale.

6. Dispositif de réseau, le dispositif de réseau comprenant :
un module de réception (1001), configuré pour tenter de recevoir des données transmises de manière répétée sur une ressource sans autorisation par l'équipement utilisateur, UE, dans N unités de temps de transmission consécutives à partir d'une unité de temps de transmission dans laquelle le dispositif de réseau détecte pour la première fois les données transmises par l'UE, N étant un entier supérieur ou égal à 1 et inférieur ou égal à K, et K étant une quantité maximale de fois où l'UE transmet de manière répétée les données,
et si les données détectées sur la ressource sans autorisation sont associées à un premier DMRS, les données détectées pour la première fois étant considérées comme des données de la transmission initiale dans la transmission répétée de l'UE ; et les données détectées sur la ressource sans autorisation sont associées à un second DMRS, les données détectées pour la première fois étant considérées comme des données de la transmission non initiale dans la transmission répétée de l'UE, le premier DMRS étant utilisé pour la transmission initiale dans la transmission répétée K fois de l'UE, et le second DMRS étant utilisé pour une transmission non initiale dans la transmission répétée K fois de l'UE ; et
un module d'envoi (1002), configuré pour envoyer des informations de planification à l'UE lorsque le dispositif de réseau n'obtient pas de données correctement décodées des données dans les N unités de temps de transmission, les informations de planification comprenant des informations concernant une ressource de transmission utilisée par l'équipement utilisateur pour retransmettre les données, et la ressource de transmission comprenant une ressource de temps et/ou une ressource de fréquence.

7. Dispositif de réseau selon la revendication 6, le dispositif de réseau comprenant en outre :
un module de détermination (1003), configuré pour déterminer un numéro de processus HARQ d'un processus HARQ utilisé par l'UE pour transmettre les données ; et
en conséquence, les informations de planification comprenant en outre le numéro de processus HARQ.

8. Dispositif de réseau selon la revendication 7, le module de détermination (1003) étant particulièrement configuré pour :
déterminer, sur la base d'une ressource de transmission sur laquelle sont situées les données détectées pour la première fois, le numéro de processus HARQ du processus HARQ utilisé par l'UE pour transmettre les données.

9. Dispositif de réseau selon la revendication 8, le module de détermination (1003) étant particulièrement configuré pour :
déterminer une ressource de transmission utilisée par l'UE pour la transmission initiale dans la transmission répétée, lorsque les données détectées pour la première fois sont des données d'une transmission non initiale dans la transmission répétée de l'UE ; et
déterminer le numéro de processus HARQ sur la base de la ressource de transmission déterminée utilisée pour la transmission initiale.

10. Dispositif de réseau selon la revendication 7, le module de détermination (1003) étant particulièrement configuré pour :
déterminer, sur la base d'un signal de référence de démodulation compris dans les données détectées pour la première fois, une ressource de transmission utilisée par l'UE pour la transmission initiale dans la transmission répétée, lorsque les données détectées pour la première fois sont des données de transmission non initiale dans la transmission répétée de l'UE ; et
déterminer le numéro de processus HARQ sur la base de la ressource de transmission déterminée utilisée pour la transmission initiale.
